# EUROPEAN PATENT APPLICATION

(11) **EP 4 621 969 A1**
(43) Date of publication of application: **24.09.2025**
(21) Application number: 23895014.1
(22) Date of filing: 21.11.2023
(51) Int. Cl.: H01M 50/383, H01M 50/24, H01M 50/358, H01M 50/325, H01M 50/204

(54) **BATTERY PACK**

(30) Priority: 21.11.2022 KR 20220156757
(71) Applicant: LG Energy Solution, Ltd., Seoul 07335 (KR)
(72) Inventor: KIM, Jae Wook, Daejeon 34122 (KR)
(74) Representative: Plasseraud IP
(86) International application number: PCT/KR2023/018834
(87) International publication number: WO 2024/112087

(57) **Abstract**

The present invention provides a battery pack including: a plurality of battery modules 100 wherein each of the plurality of battery modules 100 comprises one or more battery cells and a module housing 120 accommodating the one or more battery cells, the module housing 120 having at least partially open upper portion; a pack housing 200 accommodating the plurality of battery modules 100 and provided with an exhaust port T; and a first cover 300 covering upper portions of the plurality of battery modules 100, the first cover 300 provided with a plurality of exhaust holes 310 corresponding to the plurality of battery modules 100, respectively, the plurality of exhaust holes 310 perforating the first cover 300 vertically and in communication with the exhaust port T. Each of the plurality of exhaust holes 310 is vertically in communication with an inner space of the module housing 120 of corresponding battery module 100, and has an inner circumferential surface with an upper end higher than an upper end of the one or more battery cells accommodated in the module housing 120 of the corresponding battery module 100.

## Description

### [TECHNICAL FIELD]

This application claims the benefit of priority based on Korean Patent Application No. 10-2022-0156757 filed on November 21, 2022, entire content disclosed in the document of the patent applications is included as a part of this specification.

The present invention relates to a battery pack, and more specifically, to a battery pack wherein delaying of thermal propagation and suppression of thermal runaway are facilitated with a simple configuration at low cost.

### [BACKGROUND ART]

A secondary battery refers to a battery that may be charged and discharged, unlike primary batteries that cannot be recharged. These secondary batteries are used in small, high-tech electronic devices such as mobile phones, PDAs and laptop computers as well as in energy storage systems (ESS), electric vehicles (EV) or hybrid electric vehicles (HEV) as a power source.

A battery module refers to a device in which multiple secondary batteries (hereinafter referred to as battery cells) are connected in series or parallel. In addition, A battery pack refers to a device in which multiple battery modules are connected in series or parallel. When a problem such as a short circuit occurs in some of the battery cells inside the battery module and the temperature of the battery cell exceeds the critical temperature, a thermal runaway phenomenon may occur.

Heat, flame, etc. generated by the thermal runaway phenomenon of some battery cells inside the battery pack or the battery module elevates the temperature of other battery modules or other battery cells, which may cause the thermal runaway phenomenon to spread to other battery modules or other battery cells. When the thermal runaway phenomenon rapidly spreads to other battery modules or other battery cells, the possibility of the battery pack or the battery module igniting or exploding increases. Accordingly, it is necessary to delay heat transfer between battery cells or between battery modules 100.

In relation to this, Korean Patent No. 10-2332128 provides a battery pack capable of that delaying/preventing the propagation of thermal runaway phenomenon by installing a silicon sponge pad between battery cells.

However, when special pads are installed between battery cells to delay heat transfer between battery modules or battery cells, the manufacturing cost and the size of the battery pack or the battery module increase.

### [PRIOR ART LITERATURE]

### [PATENT DOCUMENT]

(Patent Document 0001) Korean Patent No. 10-2332128

### [DISCLOSURE]

### [TECHNICAL PROBLEM TO BE SOLVED]

In order to solve above-described problems, it is an object of the present invention to provide a battery pack capable of delaying thermal propagation (TP) and suppressing the worsening of thermal runaway (TR) at low cost with a simple configuration.

It is an object of the present invention to provide a battery pack that has a simple structure to reduce manufacturing and maintenance costs.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention provides a battery pack including a plurality of battery modules100, a pack housing 200 and a first cover300.

Each of the plurality of battery modules 100 may include one or more battery cells and a module housing 120.

**The** one or more battery cells may be accommodated in the module housing 120.

The module housing 120 may be at least partially opened upwrads.

The plurality of battery modules 100 may be accommodated in the pack housing 200.

The pack housing 200 may be provided with an exhaust port T.

The first cover 300 may cover upper portions of the plurality of battery modules 100.

The first cover 300 may be provided with a plurality of exhaust holes 310.

The plurality of exhaust holes 310 may correspond to the plurality of battery modules 100, respectively.

The plurality of exhaust holes 310 may perforate the first cover 300 vertically.

The plurality of exhaust holes 310 may be in communication with the exhaust port T.

Each of the plurality of exhaust holes 310 is vertically in communication with an inner space of the module housing 120 of corresponding battery module 100.

Each of the plurality of exhaust holes 310 may have an inner circumferential surface with an upper end higher than an upper end of the one or more battery cells accommodated in the module housing 120 of the corresponding battery module 100,

**In** each of the battery modules 100, at least one of: the module housing 120 of the battery module 100; and the pack housing 200, and the first cover 300 may define a predetermined space S.

The predetermined space S may correspond to the battery module 100.

The predetermined space S may accommodate one or more battery cells of the battery module 100.

The predetermined space S may be blocked on all sides but opened upwards by exhaust holes 310 of the corresponding battery module 100.

The different predetermined spaces S corresponding to the different battery modules 100 may be separated from each other.

In one embodiment, the battery pack may further include a second cover 400 and one or more barrier walls 500.

The second cover 400 may be installed above the first cover 300.

The second cover 400 may be spaced apart from the first cover 300 by a predetermined distance.

The one or more barrier walls 500 may be disposed between the first cover 300 and the second cover 400.

The one or more barrier walls 500 may be in contact with or coupled to the first cover 300 and the second cover 400 in vertical direction.

The one or more barrier walls 500 may interfere with a flow of gas or heat generated from the one or more battery cells accommodated in the predetermined space S.

**Each of** the one or more barrier walls 500 may be disposed between a pair of different exhaust holes 310 adjacent to each other when projected on a horizontal plane.

In one embodiment, the one or more barrier walls 500 may be coupled to a lower surface of the second cover 400.

In one embodiment, the plurality of battery modules 100 may extend in first direction intersecting vertical direction.

The plurality of battery modules 100 may be disposed side by side in the pack housing 200 in second direction intersecting the vertical direction and the first direction,

The plurality of exhaust holes 310 may be separated from each other in the second direction.

The one or more barrier walls 500 may extend in the first direction and may be arranged side by side in the second direction between the plurality of exhaust holes 310, and

The one or more barrier walls 500 may be arranged side by side in the second direction between the plurality of exhaust holes 310.

The first cover 300 and the second cover 400 may extend longer in the first direction than one end or other end of the one or more barrier wall 500.

As a result, gas or heat generated from the one or more battery cells accommodated in each predetermined space S may flow at one side or at the other side of each of the one or more barrier wall 500 in a direction intersecting the vertical direction and the first direction between the first cover 300 and the second cover 400.

In one embodiment, in the first direction, the one end of each barrier wall 500 may be at same location as the one end of the exhaust hole 310 adjacent to the each barrier wall 500, or may be located at the one side of the one end of the exhaust hole 310 adjacent to the each barrier wall 500.

In the first direction, the other end of each barrier wall 500 may be at same location as the other end of the exhaust hole 310 adjacent to the each barrier wall 500, or may be located at the other side of the other end of the exhaust hole 310 adjacent to the each barrier wall 500.

In one embodiment, the second direction may be perpendicular to the first direction.

In one embodiment, each of at least one of the plurality of battery modules 100 may include a plurality of blocks 110.

Each of the plurality of blocks 110 may include one or more of the battery cells.

For each of the at least one of the plurality of battery modules 100, the exhaust hole 310 corresponding to the battery module 100 may include a plurality of block exhaust holes 312

The plurality of block exhaust holes 312 may correspond to the plurality of blocks 110, respectively.

The plurality of block exhaust holes 312 may perforate the first cover 300 vertically.

The plurality of block exhaust holes 312 may be in communication with the exhaust port T.

The plurality of block exhaust holes 312 may be separated from each other.

Each of the plurality of block exhaust holes 312 may be vertically in communication with the inner space of the module housing 120 where one or more of the battery cells of corresponding block 110 are accommodated.

Each of the plurality of block exhaust holes 312 may have an inner circumferential surface with an upper end higher than the upper end of the one or more battery cells accommodated in the module housing 120.

The predetermined space S of each of the at least one of the plurality of battery modules 100 includes a plurality of block spaces BS corresponding to the plurality of blocks 110, respectively.

Each of the plurality of block spaces BS may accommodate one or more of the battery cells included in each of the plurality of blocks 110 corresponding to the each of the plurality of block spaces BS.

Each of the plurality of block spaces BS may be opened upwards by the block exhaust hole 310 corresponding to the each of the plurality of blocks 110.

The plurality of block spaces BS may be separated from each other.

In one embodiment, the battery pack may further include a second cover 400 and one or more barrier walls 500.

The second cover 400 may be installed above the first cover 300 and spaced apart from the first cover 300 by a predetermined distance.

The one or more barrier walls 500 may be disposed between the first cover 300 and the second cover 400.

The one or more barrier walls 500 may be in contact with or coupled to the first cover 300 and the second cover 400 in vertical direction.

The one or more barrier walls 500 may interfere with a flow of gas or heat generated from the one or more battery cells accommodated in the predetermined space S or the block space BS.

**Each of** the one or more barrier walls 500 may be disposed between a pair of different exhaust holes 310 adjacent to each other or a pair of different block exhaust holes 312 adjacent to each other when projected on a horizontal plane.

In one embodiment, the plurality of battery modules 100 may extend in first direction intersecting vertical direction.

The plurality of battery modules 100 may be disposed side by side in the pack housing 200 in second direction intersecting the vertical direction and the first direction,

The plurality of exhaust holes 310 and the plurality of block exhaust holes 312 may be separated from each other in the second direction.

The one or more barrier walls 500 may extend in the first direction and may be arranged side by side in the second direction between the plurality of exhaust holes 310 and the plurality of block exhaust holes 312, and

The one or more barrier walls 500 may be arranged side by side in the second direction between the plurality of exhaust holes 310 and the plurality of block exhaust holes 312.

The first cover 300 and the second cover 400 may extend longer in the first direction than one end or other end of the one or more barrier wall 500.

As a result, gas or heat generated from one or more of the battery cells accommodated in the predetermined space S and the block space BS may flow at one side or at the other side of each of the one or more barrier walls 500 in a direction intersecting the vertical direction and the first direction between the first cover 300 and the second cover 400.

In one embodiment, in the first direction, the one end of each barrier wall 500 may be at same location as the one end of the exhaust hole 310 or the block exhaust hole 312 adjacent to the each barrier wall 500, or may be located at the one side of the one end of the exhaust hole 310 or the block exhaust hole 312 adjacent to the each barrier wall 500.

In the first direction, the other end of each barrier wall 500 may be at same location as the other end of the exhaust hole 310 or the block exhaust hole 312 adjacent to the each barrier wall 500, or may be located at the other side of the other end of the exhaust hole 310 or the block exhaust hole 312 adjacent to the each barrier wall 500.

In one embodiment, the second direction may be perpendicular to the first direction.

In one embodiment, a through-hole 214 connecting the inside and the outside of the predetermined space S and capable of being opened and closed may be provided at the module housing 120 or pack housing 200 defining each predetermined space S.

The through-hole 214 may remain closed when a pressure of the predetermined space S is less than a threshold value and may be opened when the pressure of the predetermined space S is equal to or greater than the threshold value.

In one embodiment, a plurality of through-holes 214 may be provided.

Each of the plurality of through-holes 214 may correspond to the predetermined space S of each of the plurality of battery modules 100.

The pack housing 200 may further include a plurality of blocking plates 230 installed adjacent to the plurality of through-holes 214, respectively, and blocking the plurality of through-holes 214, respectively.

When the pressure of the predetermined space S corresponding to the through-hole 214 blocked by the blocking plate 230 is equal to or greater than the threshold value, the blocking plate 230 blocking the through-hole 214 is damaged to open the through-hole 214.

Accordingly,the through-hole 214 remains closed when a pressure of the predetermined space S is less than the threshold value and is opened when the pressure of the predetermined space S is equal to or greater than the threshold value.

In one embodiment, the pack housing 200 may include an accommodating space C and a first flow space U1.

The plurality of battery modules 100 may be accommodated in the accommodating space C.

The first flow space U1 may be disposed at one side of the accommodating space C in first direction intersecting with vertical direction. Gas or heat generated from the plurality of battery modules 100 may flow in the first flow space U1.

The plurality of battery modules 100 may be accommodated side by side in the accommodating space C in second direction intersecting with the vertical direction and the first direction

Accordingly, a plurality of the predetermined space S may be arranged side by side in the second direction.

For each predetermined space S, the through-hole 214 corresponding to the predetermined space S may be provided at one side of the predetermined space S in the first direction.

For each predetermined space S, the through-hole 214 corresponding to the predetermined space S may connect the predetermined space S to the first flow space U1.

In one embodiment, each of at least one the plurality of battery modules 100 may include a plurality of blocks 110.

Each of the plurality of blocks 110 may include one or more of the battery cells.

For each of the at least one of the plurality of battery modules 100, the exhaust hole 310 corresponding to the battery module 100 may include a plurality of block exhaust holes 312

The plurality of block exhaust holes 312 may correspond to the plurality of blocks 110, respectively.

The plurality of block exhaust holes 312 may perforate the first cover 300 vertically.

The plurality of block exhaust holes 312 may be in communication with the exhaust port T.

The plurality of block exhaust holes 312 may be separated from each other.

Each of the plurality of block exhaust holes 312 may be vertically in communication with the inner space of the module housing 120 where one or more of the battery cells of corresponding block 110 are accommodated.

Each of the plurality of block exhaust holes 312 may have an inner circumferential surface with an upper end higher than the upper end of the one or more battery cells accommodated in the module housing 120.

The predetermined space S of each of the at least one of the plurality of battery modules 100 may include a plurality of block spaces BS corresponding to the plurality of blocks 110, respectively.

Each block space BS may accommodate one or more of the battery cells included in each block 110 corresponding to the each block space BS.

Each of the plurality of block spaces BS may be opened upwards by the block exhaust hole 310 corresponding to the each of the plurality of blocks 110,

The plurality of block spaces BS may be separated from each other.

The through-hole 214 corresponding to the predetermined space S accommodating the one or more battery cells of each of the at least one of the plurality of battery modules 100 may connect the plurality of block spaces BS to the first flow space U1.

In one embodiment, the plurality of block spaces BS may extend in the first direction and be provided side by side in the second direction perpendicular to the first direction.

The through-hole 214 corresponding to the predetermined space S of each of the at least one of the plurality of battery modules 100 may be opened and connect all of the plurality of block spaces BS to the first flow space U1 when a pressure of any one of the plurality of block spaces BS increases.

### [ADVANTTAGEOUS EFFECTS]

According to the embodiments of the present invention, the battery pack may include: a plurality of battery modules 100 wherein each of the plurality of battery modules 100 includes one or more battery cells and a module housing 120 accommodating the one or more battery cells, and which is at least partially opened upwards; a pack housing 200 accommodating the plurality of battery modules 100 and provided with an exhaust port T; and a first cover 300 covering an upper portions of the plurality of battery modules 100, the first cover 300 provided with a plurality of exhaust holes 310 corresponding to the plurality of battery modules 100, respectively, the plurality of exhaust holes 310 perforating the first cover 300 vertically and in communication with the exhaust port T. Each of the plurality of exhaust holes 310 may be vertically in communication with an inner space of the module housing 120 of corresponding battery module 100, and have an inner circumferential surface with an upper end higher than an upper end of the one or more battery cells accommodated in the module housing 120 of the corresponding battery module 100.

At least one of: the module housing 120 of each of the plurality of battery modules 100; and the pack housing 200, and the first cover 300 may define a predetermined space S corresponding to each of the plurality of battery modules 100, blocked on all sides but opened upwards by the exhaust hole 310 of the corresponding battery module 100 and accommodating the one or more battery cells of the corresponding battery modules 100. Different predetermined spaces S accommodating the one or more battery cells of the different battery modules 100 are separated from each other.

Accordingly, the predetermined space S accommodating the battery cells for each battery module 100 is separated from each other such that high-temperature gas and/or heat may be exhausted through the exhaust hole 310 of the first cover 300 over the upper portion the predetermined space S. Therefore, even when thermal runaway occurs in any one of the battery modules 100 and gas and/or heat are generated, the gas and/or heat are not quickly spread/transferred to other battery modules 100, thereby delaying the thermal propagation. Here, thermal propagation may refer to a phenomenon where the battery module 100/battery cell having thermal runaway occurring therein causes serial thermal runaway in other battery modules 100/battery cells. In addition, since high-temperature gas and/or heat is easily exhausted upward, thermal runaway occurring in the battery cell may be prevented or delayed from worsening.

In addition, even when thermal runaway occurs in one of the battery modules 100 and high-temperature gas and/or heat is generated, the high-temperature gas and/or heat flows at a location higher than the upper end of the battery cell above the first cover 300. Therefore, even when the predetermined space S accommodating the battery cells of other battery modules 100 is open at the upper end thereof, the high-temperature gas and/or heat does not quickly spreads to other battery modules 100, thereby delaying the thermal propagation.

In addition, with a simple configuration, thermal propagation may be easily delayed at low cost and worsening of thermal runaway may be suppressed.

According to the embodiments of the present invention, the battery pack may further include: a second cover 400 installed above the first cover 300 and spaced apart from the first cover 300; and one or more barrier walls 500 disposed between the first cover 300 and the second cover 400 and in contact with or coupled to the first cover 300 and the second cover 400, the one or more barrier walls 500 interfering with a flow of gas or heat generated from the one or more battery cells accommodated in the predetermined space S. Each of the one or more barrier walls 500 may be disposed between a pair of different exhaust holes 310 adjacent to each other when projected on a horizontal plane.

Accordingly, even when high-temperature gas and/or heat generated by thermal runaway of any one of plurality of battery modules 100 flows into the space between the first cover 300 and the second cover 400 in communication with the predetermined space S accommodating the battery cells of another battery module 100, the barrier wall 500 prevents the high-temperature gas and/or heat from flowing into the predetermined space S accommodating the battery cells of another battery module 100. As a result, thermal propagation may be delayed.

According to the embodiments of the present invention, the one or more barrier walls 500 may be coupled to a lower surface of the second cover 400.

Accordingly, since the barrier wall 500 is coupled to the lower surface of the second cover 400 there may be no gap between the barrier wall 500 and the second cover 400 despite the pressure increase in the space between the first cover 300 and the second cover 400. Therefore, the barrier wall 500 may effectively prevent the high-temperature gas and/or heat in the space between the first cover 300 and the second cover 400 from flowing into the predetermined space S accommodating the battery cells of another battery module 100. As a result, thermal propagation may be delayed.

According to the embodiments of the present invention, the plurality of battery modules 100 may extend in first direction intersecting vertical direction and be disposed side by side in the pack housing 200 in second direction intersecting the vertical direction and the first direction. The plurality of exhaust holes 310 may be separated from each other in the second direction, The one or more barrier walls 500 extend in the first direction and may be arranged side by side in the second direction between the plurality of exhaust holes 310. The first cover 300 and the second cover 400 may extend longer in the first direction than one end or the other end of the one or more barrier wall 500 such that gas or heat generated from the one or more battery cells accommodated in the predetermined space S flows at one side or at the other side of each of the one or more barrier walls 500 in the second direction between the first cover 300 and the second cover 400.

Accordingly, since the gas and/or heat flowing in the space between the first cover 300 and the second cover 400 passes through the space at one side or the other side of the barrier wall 500 in the first direction and then flow through the exhaust port T of the pack housing 200, the height of the battery pack may be reduced. As a result, smaller battery pack may be manufactured. In addition, since the height of the second cover 400 or the first cover 300 may be maximized within the allowable range, the high-temperature gas and/or heat may be sufficiently away from the battery cell in upward direction, thereby reducing the thermal propagation delay effect and suppressing the thermal runaway occurring in the battery cell from worsening.

In addition, since the gas and/or heat generated from the plurality of battery modules 100 flows through the same space at one side or the other side of the barrier wall 500 in the first direction, the structure of the battery pack may be simplified, thereby reducing the manufacturing and maintenance costs the battery pack may be reduced.

According to the embodiment of the present invention, in the first direction, the one end of each barrier wall 500 may be at same location as the one end of the exhaust hole 310 adjacent to the each barrier wall 500, or may be located at the one side of the one end of the exhaust hole 310 adjacent to the each barrier wall 500. In the first direction, the other end of each barrier wall 500 may be at same location as the other end of the exhaust hole 310 adjacent to the each barrier wall 500, or may be located at the other side of the other end of the exhaust hole 310 adjacent to the each barrier wall 500.

Accordingly, the barrier wall 500 may effectively prevent the high-temperature gas and/or heat from flowing into the predetermined space S accommodating the battery cell of another battery module 100 through the adjacent exhaust hole 310. As a result, thermal propagation may be effectively delayed.

According to the embodiments of the present invention, the second direction may be perpendicular to the first direction.

Accordingly, it is difficult for the high-temperature gas and/or heat generated by the thermal runaway of any one of the plurality of battery modules 100 to flow into the predetermined space S accommodating the battery cells of another battery module 100 through another exhaust hole 310 located behind the barrier wall 500 after entering the space between the first cover 300 and the second cover 400 through the exhaust hole 310. This is because that the gas and/or heat discharged from the battery module 100 where thermal runaway occurs and flowing in the first direction by the barrier wall 500 must turn 180 degrees in order to enter the predetermined space S accommodating the battery cells of another battery module 100 through another exhaust hole 310 located behind the barrier wall 500. As a result, thermal propagation may be delayed even when the space between the first cover 300 and the second cover 400 is in communication with all of the plurality of accommodating spaces accommodating the battery cells of the plurality of battery modules 100.

According to the embodiments of the present invention, at least one of the plurality of battery modules 100 may include a plurality of blocks 110, each of the plurality of blocks 110 comprising the one or more battery cells. For each of the at least one of the plurality of battery modules 100, the exhaust hole 310 corresponding to the battery module 100 may include a plurality of block exhaust holes 312 corresponding to the plurality of blocks 110, respectively, the plurality of block exhaust holes 312 perforating the first cover 300 vertically, in communication with the exhaust port T and separated from each other. Each of the plurality of block exhaust holes 312 may be vertically in communication with the inner space of the module housing 120 where one or more of the battery cells of corresponding block 110 are accommodated, and have an inner circumferential surface with an upper end higher than the upper end of the one or more battery cells accommodated in the module housing 120. The predetermined space S of each of the at least one of the plurality of battery modules 100 may include a plurality of block spaces BS corresponding to the plurality of blocks 110, respectively. Each of the plurality of block spaces BS may accommodate one or more of the battery cells included in each of the plurality of blocks 110 corresponding to the each of the plurality of block spaces BS, and is opened upwards by the block exhaust hole 310 corresponding to the each of the plurality of blocks 110. The plurality of block spaces BS may be separated from each other.

Accordingly, the block spaces BS accommodating the battery cells belonging to each block 110 (e.g., bank) of the battery module 100 is separated from each other, and high-temperature gas and/or heat may be discharged through the block exhaust hole 312 over the the block space BS. Therefore, even when gas and/or heat are generated due to thermal runaway occurring in any one of the plurality of blocks 110 of any battery module 100, the gas and/or heat may be prevented from spreading/transferring to another block 110 and another battery module 100, thereby delaying thermal propagation. In addition, since high-temperature gas and/or heat is exhausted upward, thermal runaway occurring in the battery cell may be prevented or delayed from worsening.

In addition, even when gas and/or heat are generated due to thermal runaway occurring in any one of the plurality of blocks 110 of any battery module 100, the high-temperature gas and/or heat flows above the upper portions of the battery cells of other blocks 110 and other battery modules 100 over the first cover 300. Therefore, high-temperature gas and/or heat may not spread/transfer quickly to other battery modules 100 despite the block space BS and predetermined space S opening upward, thereby delaying thermal propagation.

According to the embodiments of the present invention, the battery pack may further include: a second cover 400 installed above the first cover 300 and spaced apart from the first cover 300; and one or more barrier walls 500 disposed between the first cover 300 and the second cover 400 and in contact with or coupled to the first cover 300 and the second cover 400, the one or more barrier walls 500 interfering with a flow of gas or heat generated from the one or more battery cells accommodated in the predetermined space S or the block space BS. Each of the one or more barrier walls 500 may be disposed between a pair of different exhaust holes 310 adjacent to each other or between a pair of different block exhaust holes 312 adjacent to each other when projected on a horizontal plane.

Accordingly, even when high-temperature gas and/or heat generated by thermal runaway of any one of plurality of blocks 110 of any battery module 100 enters the space between the first cover 300 and the second cover 400, the barrier wall 500 prevents the high-temperature gas and/or heat from spreading to the block space BS accommodating the battery cells of another block 110 and the predetermined space S accommodating the battery cells of another battery module 100 in communication with the space between the first cover 300 and the second cover 400 through the exhaust hole 310, thereby delaying thermal propagation.

According to the embodiments of the present invention, the plurality of battery modules 100 may extend in first direction intersecting vertical direction and be disposed side by side in the pack housing 200 in second direction intersecting the vertical direction and the first direction. The plurality of exhaust holes 310 and the plurality of block exhaust holes 312 may be separated from each other in the second direction, The one or more barrier walls 500 may extend in the first direction and be arranged side by side in the second direction between the plurality of exhaust holes 310 and the plurality of block exhaust holes 312. The first cover 300 and the second cover 400 may extend longer in the first direction than one end or other end of the one or more barrier wall 500 such that gas or heat generated from the one or more battery cells accommodated in the predetermined space S and the block space BS flows at one side or at the other side of each of the one or more barrier walls 500 in the second direction between the first cover 300 and the second cover 400.

Accordingly, since the gas and/or heat flowing in the space between the first cover 300 and the second cover 400 passes through the space at one side or the other side of the barrier wall 500 in the first direction and then flow through the exhaust port T of the pack housing 200, the height of the battery pack may be reduced. As a result, smaller battery pack may be manufactured. **In** addition, since the height of the second cover 400 or the first cover 300 may be maximized within the allowable range, the high-temperature gas and/or heat may be sufficiently away from the battery cell in upward direction, thereby reducing the thermal propagation delay effect and suppressing the thermal runaway occurring in the battery cell from worsening.

In addition, since gas and/or heat generated from the plurality of battery modules 100 and the plurality of blocks 110 of each of the plurality of battery module 100 (e.g., blocks 110) flows in the same space at one side or the other side of the barrier wall 500 in the first direction, the structure of the battery pack may be simplified, thereby reducing the manufacturing and maintenance costs the battery pack may be reduced.

According to the embodiments of the present invention, in the first direction, the one end of each of barrier wall 500 may be at same location as the one end of the exhaust hole 310 or the block exhaust hole 312 adjacent to the each barrier wall 500, or may is located at the one side of the one end of the exhaust hole 310 or the block exhaust hole 312 adjacent to the each barrier wall 500. In the first direction, the other end of each barrier wall 500 may be at same location as the other end of the exhaust hole 310 or the block exhaust hole 312 adjacent to the each barrier wall 500, or may be located at the other side of the other end of the exhaust hole 310 or the block exhaust hole 312 adjacent to the each barrier wall 500.

Accordingly, the barrier wall 500 may effectively prevent the high-temperature gas and/or heat from flowing into the accommodating space S accommodating the battery cell of another battery module 100 or the block space BS accommodating the battery cell of another block 110 through the adjacent exhaust hole 310 or the block exhaust hole 312. As a result, thermal propagation may be effectively delayed.

According to the embodiments of the present invention, the second direction may be perpendicular to the first direction.

Accordingly, it is difficult for the high-temperature gas and/or heat generated by the thermal runaway of any one of the plurality of block 110 of the battery module 100 to flow into the predetermined space S accommodating the battery cells of another battery module 100 or the block space S accommodating the battery cells of another block 110through another exhaust hole 310 or another block exhaust hole 310 located behind the barrier wall 500 after entering the space between the first cover 300 and the second cover 400 through the block exhaust hole 312. This is because that the gas and/or heat discharged from the block 110 of the battery module 100 where thermal runaway occurs and flowing in the first direction by the barrier wall 500 must turn 180 degrees in order to enter the predetermined space S or the block space BS accommodating the battery cells of another battery module 100 or another block 110 through another exhaust hole 310 or block exhaust hole 312 located behind the barrier wall 500. As a result, thermal propagation may be delayed even when the space between the first cover 300 and the second cover 400 is in communication with all of the plurality of accommodating spaces accommodating the battery cells of the plurality of battery modules 100 and all of the plurality of block spaces BS accommodating the battery cells of the plurality of blocks 110.

According to the embodiments of the present invention, a through-hole 214 connecting the inside and the outside of the predetermined space S and capable of being opened and closed may be provided at the module housing 120 or pack housing 200 defining each predetermined space S. the through-hole 214 may remain closed when a pressure of the predetermined space S is less than a threshold value and may be opened when the pressure of the predetermined space S is equal to or greater than the threshold value.

Accordingly, even when thermal runaway occurs in any one battery module 100 to generate gas and/or heat generated, gas and/or heat are discharged only through the exhaust hole 310 of the first cover 300 over the predetermined space S but not discharged from the predetermined space S through the through-hole 214 until the pressure of the predetermined space S exceeds the threshold value such that gas and/or heat stagnate in the predetermined space S. As a result, thermal propagation may be delayed.

In addition, even when gas and/or heat is discharged from the predetermined space S through an open through-hole 214 due to the pressure of the predetermined space S of the battery module 100 in which thermal runaway is occurring being higher than the threshold value, other through-holes 214 corresponding to other battery modules 100 remains closed due to the pressure of the predetermined space S of other battery modules 100 being lower than the threshold value, thereby preventing the gas and/or heat discharged from the battery module 100 where thermal runaway is occurring from quickly spreading/transmitting to other battery modules 100. As a result, thermal propagation may be delayed.

According to the embodiments of the present invention, a plurality of through-holes 214 may be provided. Each of the plurality of through-holes 214 may correspond to the predetermined space S of each of the plurality of battery modules 100. The pack housing 200 may further include a plurality of blocking plates 230 installed adjacent to the plurality of through-holes 214, respectively, and blocking the plurality of through-holes 214, respectively. When the pressure of the predetermined space S corresponding to the through-hole 214 blocked by the blocking plate 230 is equal to or greater than the threshold value, the blocking plate 230 blocking the through-hole 214 is damaged to open the through-hole 214. Accordingly, when the pressure of a predetermined space S is less than the threshold value, the blocking plate 230 remains closed, and when the pressure of the predetermined space S is equal to or greater than the threshold value, the blocking plate 230 is opened.

Accordingly, the through-hole 214 connecting the inside and outside of the predetermined space S that may be opened and closed according to the pressure of the predetermined space S may be provided at low cost and with a simple configuration.

According to the embodiments of the present invention, the pack housing 200 may be provided with: an accommodating space C accommodating the plurality of battery modules 100; and a first flow space U1 where gas or heat generated in the plurality of battery modules flows, the first flow space U1 disposed at one side of the accommodating space C in first direction intersecting with vertical direction. The plurality of battery modules 100 may be accommodated side by side in the accommodating space C in second direction intersecting with the vertical direction and the first direction such that a plurality of the predetermined space S corresponding to the plurality of battery modules 100, respectively, may be provided side by side in the second direction. The through-hole 214 corresponding to the predetermined space S is provided at one side of the predetermined space S in the first direction to connect the predetermined space S and the first flow space U1.

Since the first flow space U1 is provided at one end of the accommodating space C in the first direction rather than above the accommodating space C unlike the first cover 300 and the second cover 400, the height of the battery pack may be reduced. As a result, the smaller battery pack may be manufactured. **In** addition, since the heights of the upper ends of the first cover 300 and the second cover 400 may be maximized within the allowable range, high-temperature gas and/or heat may be kept sufficiently upward away from the battery cell, thereby improving the thermal propagation delay effect, and preventing the worsening of thermal runaway occurring in the battery cell.

**In** addition, since all of the gas generated from a plurality of battery modules 100 flows through the first flow space U1 after passing through the through-hole 214, the structure of the battery pack is simplified, and the manufacturing and maintenance costs of the battery pack may be reduced.

According to the embodiments of the present invention, each of at least one of the plurality of battery modules 100 may include a plurality of blocks 110, each of the plurality of blocks 110 comprising one or more battery cells. For each of the at least one of the plurality of battery modules 100, the exhaust hole 310 corresponding to the battery module 100 may include a plurality of block exhaust holes 312 corresponding to the plurality of blocks 110, respectively, the plurality of block exhaust holes 312 perforating the first cover 300 vertically, in communication with the exhaust port T and separated from each other. Each of the plurality of block exhaust holes 312 may be vertically in communication with the inner space of the module housing 120 where one or more of the battery cells of corresponding block 110 are accommodated, and have an inner circumferential surface with an upper end higher than the upper end of the one or more battery cells accommodated in the module housing 120. The predetermined space S of each of the at least one of the plurality of battery modules 100 may include a plurality of block spaces BS corresponding to the plurality of blocks 110, respectively. Each of the plurality of block spaces BS may accommodate one or more of the battery cells included in each of the plurality of blocks 110 corresponding to the each of the plurality of block spaces BS, and is opened upwards by the block exhaust hole 310 corresponding to the each of the plurality of blocks 110. The plurality of block spaces BS may be separated from each other. The through-hole 214 corresponding to the predetermined space S accommodating the one or more battery cells of each of the at least one of the plurality of battery modules 100 connects the plurality of block spaces BS to the first flow space U1.

Accordingly, even when thermal runaway occurs in any one of the blocks 110 and gas and/or heat are generated, the gas and/or heat are discharged to the upper portion of the block space BS through the exhaust hole 310 of the first cover 300 or the block exhaust hole 312 rather than discharged from the block space BS through the through-hole 214 and stagnate in the block space BS until the pressure of the block space BS corresponding to the blocks 110 where thermal runaway is occurring or the pressure of the predetermined space S including the block space BS becomes sufficiently high. As a result, thermal propagation may be delayed.

According to the embodiments of the present invention, the plurality of block spaces BS may extend in the first direction and be provided side by side in the second direction perpendicular to the first direction. The through-hole 214 corresponding to the predetermined space S of each of the at least one of the plurality of battery modules 100 may be opened and connect all of the plurality of block spaces BS to the first flow space U1 when a pressure of any one of the plurality of block spaces BS increases.

Accordingly, even when the block spaces BS of other blocks 110 as well as the block space BS of the block 110 where thermal runaway is occurring are connected to the first flow space U1, gas and/or heat discharged through the through-hole 214 from the block space BS of block 110 where thermal runaway is occurring does not flow back into the block space BS of other blocks 110 through the through-hole 214 due to the block spaces BS extending in the first direction and provided side by side in the second direction perpendicular to the first direction. This is because gas and/or heat discharged in the first direction from the block space BS of block 110 where thermal runaway is occurring must turn 180 degrees In order to flow into the block space BS of other blocks 110. As a result, thermal propagation may be delayed even when all of block spaces BS are connected to the first flow space U1 caused by an increase in the pressure of any one of the plurality of block spaces.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

In addition to the advantageous effects described above, specific effects of the present invention will be described further while describing specific details of the present invention.

### [BRIEF DESCRIPTION OF DRAWINGS]

FIGS. 1 and 2 are a perspective view and an exploded perspective view of a battery pack according to an embodiment of the present invention.
FIG. 3 is a perspective view illustrating the battery pack of FIGS. 1 and 2 with the second cover removed.
FIGS. 4 and 5 are a perspective view and a plan view illustrating the battery pack of FIG. 3 with the first cover removed.
FIG. 6 is a perspective view illustrating the battery pack of FIGS. 4 and 5 with the battery module removed.
FIG. 7 is a perspective view illustrating the battery pack of FIG. 6 with blocking plate removed.
FIG. 8 is a perspective view illustrating the first cover and the second cover of FIGS. 1 to 3.
FIG. 9 is a cross-sectional view taken along line 9-9' of FIG. 1.
FIG. 10 is a cross-sectional view taken along line 10-10' of FIG. 1.
FIG. 11 is a cross-sectional view illustrating a battery pack according to another embodiment of the present invention.
FIG. 12 is a table comparing experiment results of the thermal propagation of the prior art and the present invention.

### [DETAILED DESCRIPTION OF THE INVENTION]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

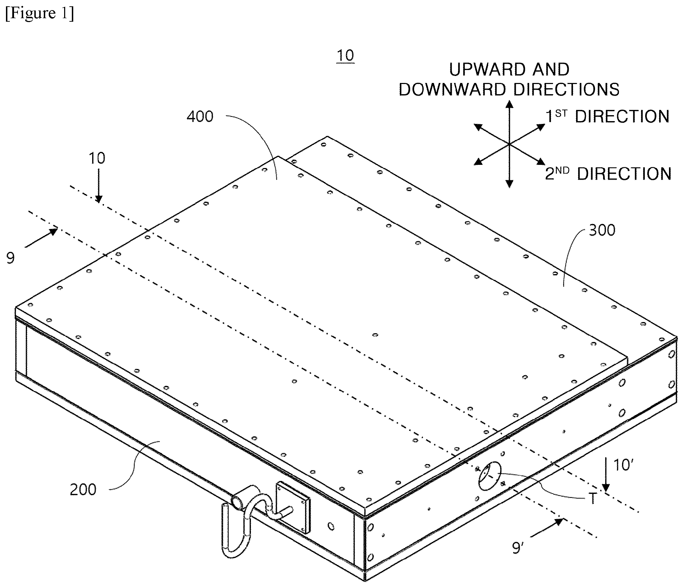

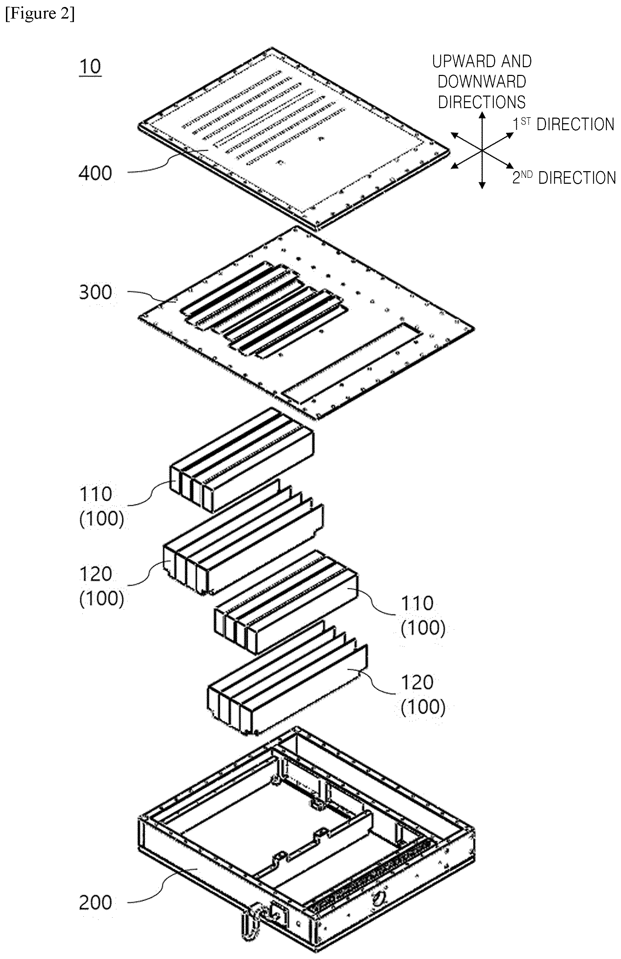

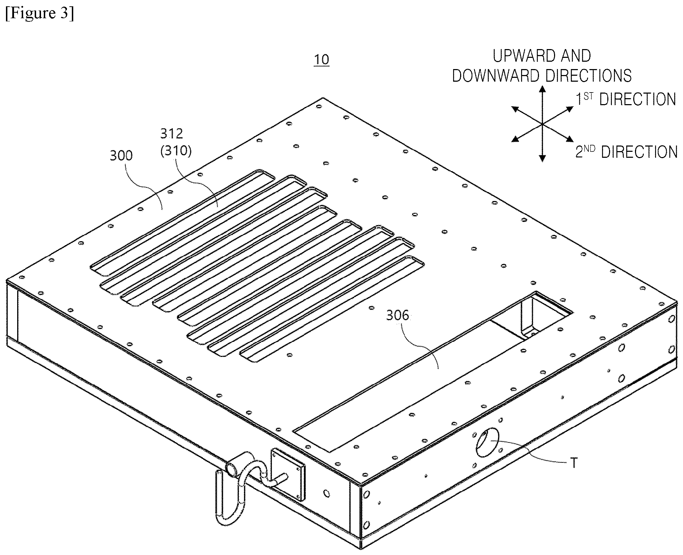

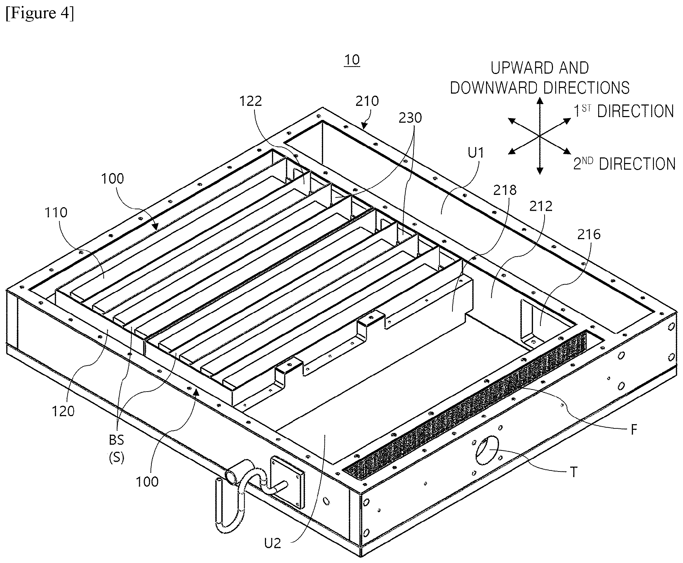

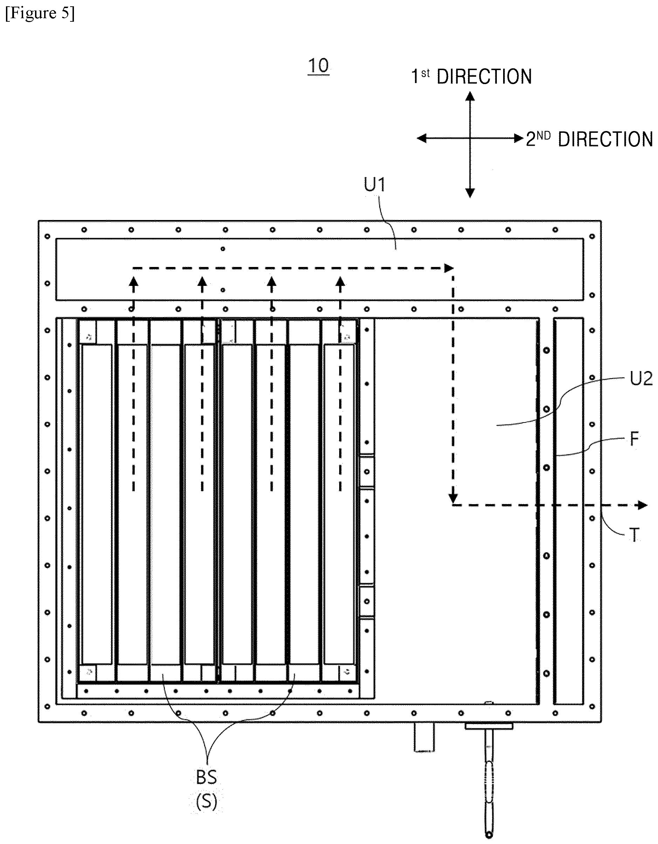

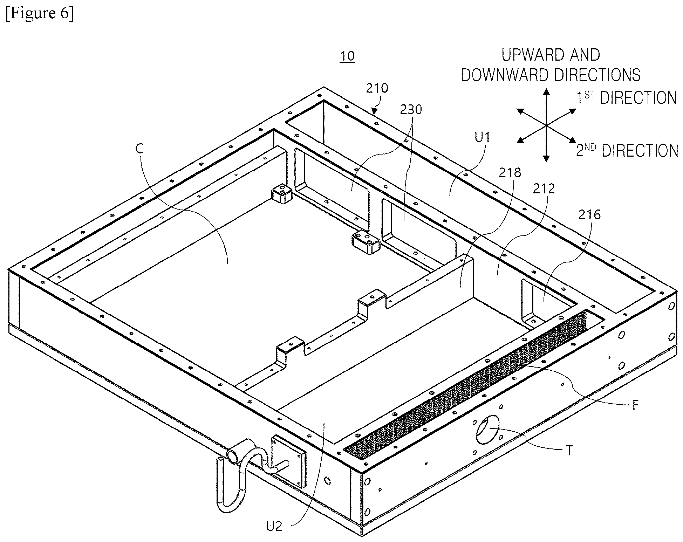

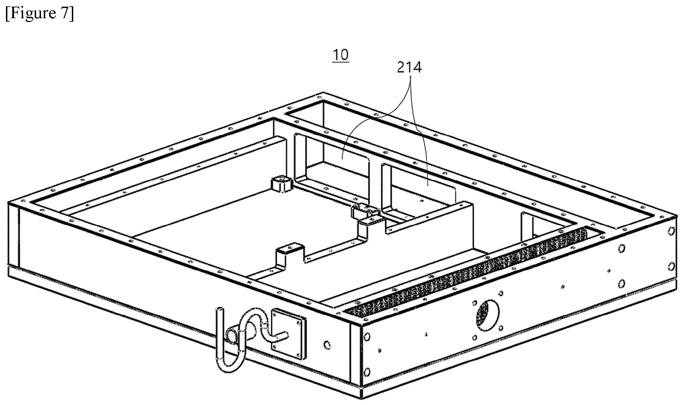

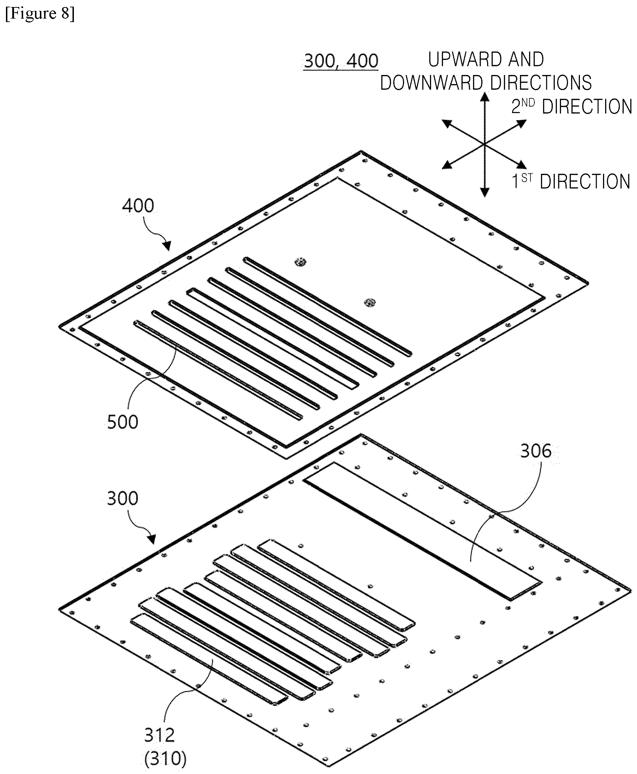

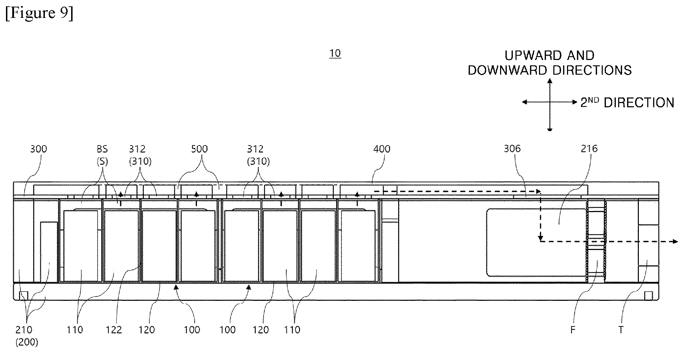

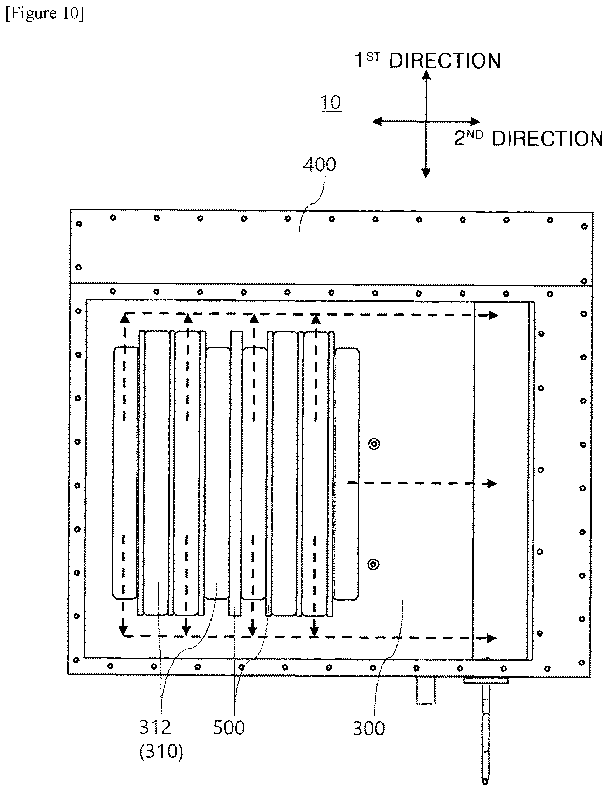

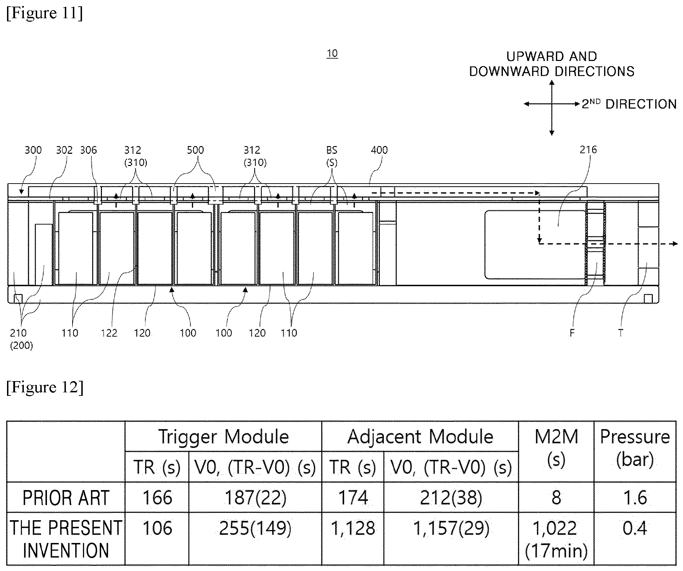

FIGS. 1 and 2 are a perspective view and an exploded perspective view of a battery pack according to an embodiment of the present invention. FIG. 3 is a perspective view illustrating the second pack of FIGS. 1 and 2 with the pack cover removed. FIGS. 4 and 5 are a perspective view and a plan view illustrating the battery pack of FIG. 3 with the first cover removed. FIG. 6 is a perspective view illustrating the battery pack of FIGS. 4 and 5 with the battery module removed. FIG. 7 is a perspective view illustrating the battery pack of FIG. 6 with blocking plate removed. FIG. 8 is a perspective view illustrating the first cover and the second cover of FIGS. 1 to 3. FIG. 9 is a cross-sectional view taken along line 9-9' of FIG. 1. FIG. 10 is a cross-sectional view taken along line 10-10' of FIG. 1. FIG. 11 is a cross-sectional view illustrating a battery pack according to another embodiment of the present invention. FIG. 12 is a table comparing experiment results of the thermal propagation of the prior art and the present invention.

### [BATTERY PACK]

Referring to FIGS. 1 to 7, a battery pack 10 according to an embodiment of the present invention may include a plurality of battery modules 100, a pack housing 200 and a first cover 300. The battery pack 10 may further include a second cover 400 and one or more barrier walls 500. The battery pack may further include a blocking plate 230.

Each element will be described in detail hereinafter.

### [BATTERY MODULE]

A plurality of battery modules 100 may be provided.

The plurality of battery modules 100 may extend in first direction intersecting vertical direction and be disposed side by side in the pack housing 200 in second direction intersecting the vertical direction and the first direction.

Each battery module 100 may include a plurality of blocks 110. Each block 110 may include one or more battery cells. The block 110 may include a single battery cell or a collection of plurality of battery cells.

Each battery module 100 may include one or more battery cells and a module housing 120.

A plurality of blocks 110 or one or more battery cells may be accommodated in the module housing 120. The plurality of blocks 110 or one or more battery cells may be arranged side by side in the module housing 120 in the second direction (e.g., left and right direction). The module housing 120 may be at least partially opened upwards.

The module housing 120 may include one or more partition walls 122, which will be described later.

### [PACK HOUSING]

The plurality of battery modules 100 may be accommodated in the pack housing 200.

For example, the pack housing 200 may include an accommodating space C and a first flow space U1. The pack housing 200 may further include a second flow space U2. The pack housing 200 may include an exhaust port T.

The plurality of battery modules 100 may be accommodated in the accommodating space C.

In the accommodating space C, the plurality of battery modules 100 may be accommodated side by side in the second direction (e.g., left and right direction). Accordingly, a plurality of predetermined spaces S corresponding to the plurality of battery modules, respectively, may be formed side by side in the second direction.

The first flow space U1 may be provided at one side (e.g., rear side) of the accommodating space C in the first direction (e.g., front and rear direction). Here, the first direction may be a direction that intersects the upward and downward directions. The first flow space U1 may be in communication with the accommodating space C and the predetermined space S, which will be described later. For example, the first flow space U1 may be in communication with the predetermined space S through a through-hole 214 provided in a first division wall 212, which will be described later. Gas and/or heat generated from a plurality of battery modules 100 may flow in the first flow space U1.

The second flow space U2 may be provided at one side (e.g., right side) of the accommodating space C in the second direction (e.g., left and right directions). Here, the second direction may intersect with a vertical direction and the first direction. The second flow space U2 may be in communication with an exhaust hole 310 of the first cover 300. In addition, The second flow space U2 may be in communication with the first flow space U1 (e.g., through the through-hole 216). Gas and/or heat generated from the battery module 100 accommodated in the accommodating space C may flow in the second flow space U2.

The exhaust port T may be in communication with the exhaust hole 310 of the first cover 300. The exhaust port T may also be in communication with the second flow space U2. Gas and/or heat generated from the battery module 100 accommodated in the accommodating space C may be discharged to the outside of the pack housing 200 through the exhaust port T.

Meanwhile, the pack housing 200 may include at least one of a first division wall 212, a second division wall 218 and a filter F.

The first division wall 212 may separate the accommodating space C and the first flow space U1. The first division wall 212 may define a predetermined space S, which will be described later. A through-hole 214, which will be described later, may be provided in the first division wall 212.

The second division wall 218 may separate the accommodating space C and the second flow space U2. The second division wall 218 may define the predetermined space S, which will be described later.

The filter F may be disposed between the second flow space U2 and the exhaust port T. The filter F may prevent inflammable particles separated from the battery cell due to thermal runaway, etc. from being discharged to the outside.

In summary, gas and/or heat generated from the battery module 100 accommodated in the accommodating space C sequentially flows through the exhaust hole 310, the space between the first cover 300 and the second cover 400, the second flow space U2, the filter F and the exhaust port T to be discharged to the outside of the pack housing 200 or through the through-hole 214, the first flow space U1, the second flow space U2, the filter F and the exhaust port T to be discharged to the outside of the pack housing 200 (FIGS. 3 and 4).

### [FIRST COVER]

Referring further to FIGS. 8 to 10, the first cover 300 may cover an upper portions of the plurality of battery modules 100. The first cover 300 may be coupled to the module housing 120 of the battery module 100 or to the pack housing 200.

The first cover 300 may include/be provided with a plurality of exhaust holes 310.

The plurality of exhaust holes 310 may correspond to the plurality of battery modules 100, respectively. The plurality of exhaust holes 310 may perforate the first cover 300 vertically. The plurality of exhaust holes 310 may be in communication with the exhaust port T.
For example, the plurality of exhaust holes 310 may be in communication with the exhaust port T through a through-hole 306 adjacent to the exhaust port T and perforating the first cover 300 vertically.

Each of the plurality of exhaust holes 310 may be vertically in communication with an inner space of the module housing 120 of corresponding battery module 100. Each of the plurality of exhaust holes 310 may have an inner circumferential surface with an upper end higher than an upper end of the one or more battery cells accommodated in the module housing 120 of the corresponding battery module 100.

When the plurality of battery modules 100 extend in the first direction and are accommodated in the pack housing 200 side by side in the second direction, the plurality of exhaust holes 310 may be separated from each other in the second direction.

Specifically, for example, the first cover 300 may include an upper frame 302 and one or more ribs 304 (FIG.)

The upper frame 302 may have a plate shape. The plurality of exhaust holes 310 may be provided at the upper frame 302.

The one or more ribs 304 will be described later.

### [PREDETERMINED SPACE]

A plurality of predetermined spaces S may be defined. The plurality of predetermined spaces S may correspond to the plurality of battery modules 100, respectively. Specifically, in each battery module 100, at least one of: the module housing 120 of the battery module 100; and the pack housing 200 and the first cover 300 may define a predetermined space S corresponding to the battery module 100.

Each predetermined space S may accommodate the one or more battery cells of the corresponding battery module 100. Each predetermined space S may be blocked on all sides but opened upwards by the exhaust hole 310 corresponding to the batter module 100.

Different predetermined spaces S corresponding to different battery modules 100 may be separated from each other. For example, the plurality of block spaces BS may be separated from each other by the module housing 120.

Accordingly, the predetermined space S accommodating the battery cells for each battery module 100 is separated from each other such that high-temperature gas and/or heat may be exhausted through the exhaust hole 310 of the first cover 300 over the upper portion the predetermined space S. Therefore, even when thermal runaway occurs in any one of the battery modules 100 and gas and/or heat are generated, the gas and/or heat are not quickly spread/transferred to other battery modules 100, thereby delaying the thermal propagation. Here, thermal propagation may refer to a phenomenon where the battery module 100/battery cell having thermal runaway occurring therein causes serial thermal runaway in other battery modules 100/battery cells. In addition, since high-temperature gas and/or heat is easily exhausted upward, thermal runaway occurring in the battery cell may be prevented or delayed from worsening.

In addition, even when thermal runaway occurs in one of the battery modules 100 and high-temperature gas and/or heat is generated, the high-temperature gas and/or heat flows at a location higher than the upper end of the battery cell above the first cover 300. Therefore, even when the predetermined space S accommodating the battery cells of other battery modules 100 is open at the upper end thereof, the high-temperature gas and/or heat does not quickly spreads to other battery modules 100, thereby delaying the thermal propagation.

In addition, with a simple configuration, thermal propagation may be easily delayed at low cost and worsening of thermal runaway may be suppressed.

### [SECOND COVER AND BARRIER WALL]

The second cover 400 may be installed above and spaced apart from the first cover 300 by a predetermined distance.

The one or more barrier walls 500 may be disposed between the first cover 300 and the second cover 400. The one or more barrier walls 500 may be in contact with or coupled to the first cover 300 and the second cover 400. The one or more barrier walls 500 may interfere with a flow of gas or heat generated from the one or more battery cells accommodated in the predetermined space S.

**Each of** the one or more barrier walls 500 may be disposed between a pair of different exhaust holes 310 adjacent to each other when projected on a horizontal plane.

Accordingly, even when high-temperature gas and/or heat generated by thermal runaway of any one of plurality of battery modules 100 flows into the space between the first cover 300 and the second cover 400 in communication with the predetermined space S accommodating the battery cells of another battery module 100, the barrier wall 500 prevents the high-temperature gas and/or heat from flowing into the predetermined space S accommodating the battery cells of another battery module 100. As a result, thermal propagation may be delayed.

The one or more barrier walls 500 may be coupled to a lower surface of the second cover 400.

Accordingly, since the barrier wall 500 is coupled to the lower surface of the second cover 400 there may be no gap between the barrier wall 500 and the second cover 400 despite the pressure increase in the space between the first cover 300 and the second cover 400. Therefore, the barrier wall 500 may effectively prevent the high-temperature gas and/or heat in the space between the first cover 300 and the second cover 400 from flowing into the predetermined space S accommodating the battery cells of another battery module 100. As a result, thermal propagation may be delayed.

When a plurality of exhaust holes 310 are separated from each other in the second direction, the one or more barrier walls 500 may extend in the first direction and be arranged side by side in the second direction between the plurality of exhaust holes 310.

Here, the first cover 300 and the second cover 400 may extend longer in the first direction than one end (e.g. rear end) or the other end (e.g. front end) of the one or more barrier wall 500 such that gas or heat generated from the one or more battery cells accommodated in the predetermined space S flows at one side or at the other side of each of the one or more barrier walls 500 in the second direction between the first cover 300 and the second cover 400 (FIG. 10).

Accordingly, since the gas and/or heat flowing in the space between the first cover 300 and the second cover 400 passes through the space at one side or the other side of the barrier wall 500 in the first direction and then flow through the exhaust port T of the pack housing 200, the height of the battery pack may be reduced. As a result, smaller battery pack may be manufactured. In addition, since the height of the second cover 400 or the first cover 300 may be maximized within the allowable range, the high-temperature gas and/or heat may be sufficiently away from the battery cell in upward direction, thereby reducing the thermal propagation delay effect and suppressing the thermal runaway occurring in the battery cell from worsening.

In addition, since the gas and/or heat generated from the plurality of battery modules 100 flows through the same space at one side or the other side of the barrier wall 500 in the first direction, the structure of the battery pack may be simplified, thereby reducing the manufacturing and maintenance costs the battery pack may be reduced.

Here, in the first direction, the one end of each barrier wall 500 may be at same location as the one end of the exhaust hole 310 adjacent to the each barrier wall 500, or may be located at the one side of the one end of the exhaust hole 310 adjacent to the each barrier wall 500 (FIG. 10). In addition, in the first direction, the other end of each barrier wall 500 may be at same location as the other end of the exhaust hole 310 adjacent to the each barrier wall 500, or may be located at the other side of the other end of the exhaust hole 310 adjacent to the each barrier wall 500 (FIG. 10).

Accordingly, the barrier wall 500 may effectively prevent the high-temperature gas and/or heat from flowing into the predetermined space S accommodating the battery cell of another battery module 100 through the adjacent exhaust hole 310. As a result, thermal propagation may be effectively delayed.

Here, the second direction may be perpendicular to the first direction.

Accordingly, it is difficult for the high-temperature gas and/or heat generated by the thermal runaway of any one of the plurality of battery modules 100 to flow into the predetermined space S accommodating the battery cells of another battery module 100 through another exhaust hole 310 located behind the barrier wall 500 after entering the space between the first cover 300 and the second cover 400 through the exhaust hole 310. This is because that the gas and/or heat discharged from the battery module 100 where thermal runaway occurs and flowing in the first direction by the barrier wall 500 must turn 180 degrees in order to enter the predetermined space S accommodating the battery cells of another battery module 100 through another exhaust hole 310 located behind the barrier wall 500. As a result, thermal propagation may be delayed even when the space between the first cover 300 and the second cover 400 is in communication with all of the plurality of accommodating spaces accommodating the battery cells of the plurality of battery modules 100.

### [BLOCK, BLOCK EXHAUST HOLE AND BLOCK SPACE]

Each of at least one of the plurality of battery modules 100 may include a plurality of blocks 110. Each of the plurality of blocks 110 may include one or more of the battery cells. Here, block 110 may be a bank.

For each of the at least one of the plurality of battery modules 100, the exhaust hole 310 corresponding to the battery module 100 may include a plurality of block exhaust holes 312.

The plurality of block exhaust holes 312 may correspond to the plurality of blocks 110, respectively. The plurality of block exhaust holes 312 may perforate the first cover 300 vertically. The plurality of block exhaust holes 312 may be in communication with the exhaust port T. The plurality of block exhaust holes 312 may be separated from each other,

Each of the plurality of block exhaust holes 312 may be vertically in communication with the inner space of the module housing 120 where one or more of the battery cells of corresponding block 110 are accommodated. Each of the plurality of block exhaust holes 312 may have an inner circumferential surface with an upper end higher than the upper end of the one or more battery cells accommodated in the module housing 120.

The predetermined space S of each of the at least one of the plurality of battery modules 100 may include a plurality of block spaces BS corresponding to the plurality of blocks 110, respectively.

Each of the plurality of block spaces BS may accommodate one or more of the battery cells included in each of the plurality of blocks 110 corresponding to the each of the plurality of block spaces BS. Each of the plurality of block spaces BS may be opened upwards by the block exhaust hole 310 corresponding to the each of the plurality of blocks 110.

The plurality of block spaces BS may be separated from each other. For example, the plurality of block spaces BS may be separated from each other by one or more partition walls 122 of the module housing 120.

Accordingly, the block spaces BS accommodating the battery cells belonging to each block 110 (e.g., bank) of the battery module 100 is separated from each other, and high-temperature gas and/or heat may be discharged through the block exhaust hole 312 over the the block space BS. Therefore, even when gas and/or heat are generated due to thermal runaway occurring in any one of the plurality of blocks 110 of any battery module 100, the gas and/or heat may be prevented from spreading/transferring to another block 110 and another battery module 100, thereby delaying thermal propagation. In addition, since high-temperature gas and/or heat is exhausted upward, thermal runaway occurring in the battery cell may be prevented or delayed from worsening.

In addition, even when gas and/or heat are generated due to thermal runaway occurring in any one of the plurality of blocks 110 of any battery module 100, the high-temperature gas and/or heat flows above the upper portions of the battery cells of other blocks 110 and other battery modules 100 over the first cover 300. Therefore, high-temperature gas and/or heat may not spread/transfer quickly to other battery modules 100 despite the block space BS and predetermined space S opening upward, thereby delaying thermal propagation.

Meanwhile, the one or more barrier walls 500 may interfere with a flow of gas or heat generated from the one or more battery cells accommodated in the predetermined space S or the block space BS. In addition, each of the one or more barrier walls 500 may be disposed between a pair of different exhaust holes 310 adjacent to each other or between a pair of different block exhaust holes 312 adjacent to each other when projected on a horizontal plane.

Here, the pair of exhaust holes 310 adjacent to each other may correspond to a pair of adjacent battery modules 100, respectively. In addition, the pair of block exhaust holes 312 may be a pair of adjacent block exhaust holes 312 included in the exhaust hole 310 of the same battery module 100.

Accordingly, even when high-temperature gas and/or heat generated by thermal runaway of any one of plurality of blocks 110 of any battery module 100 enters the space between the first cover 300 and the second cover 400, the barrier wall 500 prevents the high-temperature gas and/or heat from spreading to the block space BS accommodating the battery cells of another block 110 and the predetermined space S accommodating the battery cells of another battery module 100 in communication with the space between the first cover 300 and the second cover 400 through the exhaust hole 310, thereby delaying thermal propagation.

In addition, the plurality of battery modules 100 may extend in the first direction intersecting vertical direction and may be disposed side by side in the pack housing 200 in the second direction intersecting the vertical direction and the first direction. When the plurality of exhaust holes 310 and the plurality of block exhaust hole 312 are separated from each other in the second direction, the one or more barrier walls 500 may extend in the first direction and may be arranged side by side in the second direction between the plurality of exhaust holes 310 and the plurality of block exhaust hole 312 (FIG. 4).

Here, as described above, the first cover 300 and the second cover 400 may extend longer in the first direction than one end or the other end of the one or more barrier wall 500 such that gas or heat generated from the one or more battery cells accommodated in the predetermined space S and the block space BS flows at one side or at the other side of each of the one or more barrier walls 500 in the second direction between the first cover 300 and the second cover 400 (FIG. 3).

Accordingly, since the gas and/or heat flowing in the space between the first cover 300 and the second cover 400 passes through the space at one side or the other side of the barrier wall 500 in the first direction and then flow through the exhaust port T of the pack housing 200, the height of the battery pack may be reduced. As a result, smaller battery pack may be manufactured. In addition, since the height of the second cover 400 or the first cover 300 may be maximized within the allowable range, the high-temperature gas and/or heat may be sufficiently away from the battery cell in upward direction, thereby reducing the thermal propagation delay effect and suppressing the thermal runaway occurring in the battery cell from worsening.

In addition, since gas and/or heat generated from the plurality of battery modules 100 and the plurality of blocks 110 of each of the plurality of battery module 100 (e.g., blocks 110) flows in the same space at one side or the other side of the barrier wall 500 in the first direction, the structure of the battery pack may be simplified, thereby reducing the manufacturing and maintenance costs the battery pack may be reduced.

Here, in the first direction, the one end of each barrier wall 500 is at same location as the one end of the exhaust hole 310 or the one end of the block exhaust hole 312 adjacent to the each barrier wall 500, or is located at the one side of the one end of the exhaust hole 310 or the one end of the block exhaust hole 312 adjacent to the each barrier wall 500 (FIGS. 2 and 3). In addition, in the first direction, the other end of each barrier wall 500 is at same location as the other end of the exhaust hole 310 or the other end of the block exhaust hole 312 adjacent to the each barrier wall 500, or is located at the other side of the other end of the exhaust hole 310 or the other end of the block exhaust hole 312 adjacent to the each barrier wall 500 (FIG. 10).

Accordingly, the barrier wall 500 may effectively prevent the high-temperature gas and/or heat from flowing into the accommodating space S accommodating the battery cell of another battery module 100 or the block space BS accommodating the battery cell of another block 110 through the adjacent exhaust hole 310 or the block exhaust hole 312. As a result, thermal propagation may be effectively delayed.

Here, as described above, the second direction may be perpendicular to the first direction.

Accordingly, it is difficult for the high-temperature gas and/or heat generated by the thermal runaway of any one of the plurality of block 110 of the battery module 100 to flow into the predetermined space S accommodating the battery cells of another battery module 100 or the block space S accommodating the battery cells of another block 110through another exhaust hole 310 or another block exhaust hole 310 located behind the barrier wall 500 after entering the space between the first cover 300 and the second cover 400 through the block exhaust hole 312. This is because that the gas and/or heat discharged from the block 110 of the battery module 100 where thermal runaway occurs and flowing in the first direction by the barrier wall 500 must turn 180 degrees in order to enter the predetermined space S or the block space BS accommodating the battery cells of another battery module 100 or another block 110 through another exhaust hole 310 or block exhaust hole 312 located behind the barrier wall 500. As a result, thermal propagation may be delayed even when the space between the first cover 300 and the second cover 400 is in communication with all of the plurality of accommodating spaces accommodating the battery cells of the plurality of battery modules 100 and all of the plurality of block spaces BS accommodating the battery cells of the plurality of blocks 110.

### [PARTITION WALLS AND RIBS]

The module housing 120 of at least one of the battery modules 100 described above may include a partition wall 122.

The partition walls 122 may be arranged to be spaced apart from each other in the horizontal direction. For example, the partition walls 122 may be spaced apart from each other and arranged side by side in the second direction (e.g., left and right directions). The partition walls 122 may partition the spaces (block space) where battery cells belonging to different blocks 110 are accommodated.

Further referring to FIG. 11, the first cover 300 may include an upper frame 302 and one or more ribs 304.

The one or more ribs 304 may protrude downward from the lower surface of the upper frame 302. The one or more ribs 304 may correspond to sidewall of the module housing 120 and/or the one or more partition walls 122, respectively. The one or more ribs 304 may extend along sidewall of the module housing 120 and/or the one or more partition walls 122 when projected on a horizontal plane so as to be adjacent to or in contact with sidewall of the module housing 120 and/or the one or more partition walls 122, respectively.

The plurality of block spaces BS may be partitioned in the predetermined space S by the one or more partition wall 122 and the one or more rib 320, and accordingly, the plurality of block spaces BS may be separated from each other.

When projected on a horizontal plane, the partition wall 122 and the rib 304 may be disposed between a pair of adjacent exhaust holes 310.

### [THROUGH-HOLE AND MEMBRANE PLATE]

A plurality of through-holes 214 may be provided. The through-hole 214 may be provided at the module housing 120 or pack housing 200, defining each predetermined space S. For example, two through-holes 214 connecting the inside and outside of two predetermined spaces S and capable of being opened and closed may be provided at the first division wall 212 of the pack housing 200, which defines two predetermined spaces S along with two module housings 120 and two module covers 300 (FIGS. 4, 6 and 7).

A plurality of through-holes 214 may be provided. Each of the plurality of through-holes 214 may correspond to the predetermined space S of each of the plurality of battery modules 100.

The through-hole 214 may remain closed when a pressure of the predetermined space S is less than a threshold value and may be opened when the pressure of the predetermined space S is equal to or greater than the threshold value.

Accordingly, even when thermal runaway occurs in any one battery module 100 to generate gas and/or heat generated, gas and/or heat are discharged only through the exhaust hole 310 of the first cover 300 over the predetermined space S but not discharged from the predetermined space S through the through-hole 214 until the pressure of the predetermined space S exceeds the threshold value such that gas and/or heat stagnate in the predetermined space S. As a result, thermal propagation may be delayed.

In addition, even when gas and/or heat is discharged from the predetermined space S through an open through-hole 214 due to the pressure of the predetermined space S of the battery module 100 in which thermal runaway is occurring being higher than the threshold value, other through-holes 214 corresponding to other battery modules 100 remains closed due to the pressure of the predetermined space S of other battery modules 100 being lower than the threshold value, thereby preventing the gas and/or heat discharged from the battery module 100 where thermal runaway is occurring from quickly spreading/transmitting to other battery modules 100. As a result, thermal propagation may be delayed.

A plurality of through-holes 214 may be provided. Each of the plurality of through-holes 214 may correspond to the predetermined space S of each of the plurality of battery modules 100 (FIGS. 4 and 7).

Meanwhile, as described above, the first flow space U1 of the pack housing 200 is provide at one side (e.g. rear side) of the accommodating space C in the first direction, and a plurality of battery modules 100 are accommodated side by side in the accommodating space C in the second direction. And thereby the plurality of predetermined spaces S corresponding to the plurality of battery modules 100, respectively, are provided side by side in the second direction. Here, the through-hole 214 corresponding to the predetermined spaces S is provided at one side (e.g., rear side) of the predetermined space S in the first direction to connect the predetermined space S and the first flow space U1 (FIGS. 1 and 9).

Since the first flow space U1 is provided at the one side of the accommodating space C in the first direction rather than above the accommodating space C unlike the first cover 300 and the second cover 400, the height of the battery pack may be reduced. As a result, the smaller battery pack may be manufactured. In addition, since the heights of the upper ends of the first cover 300 and the second cover 400 may be maximized within the allowable range, high-temperature gas and/or heat may be kept sufficiently upward away from the battery cell, thereby improving the thermal propagation delay effect, and preventing the worsening of thermal runaway occurring in the battery cell.

In addition, since all of the gas generated from a plurality of battery modules 100 flows through the first flow space U1 after passing through the through-hole 214, the structure of the battery pack is simplified, and the manufacturing and maintenance costs of the battery pack may be reduced.

Here, in each of the at least one of the plurality of battery modules 100 described above including a plurality of blocks 110, the through-hole 214 corresponding to the predetermined space S accommodating the one or more battery cells may connect the plurality of block spaces BS to the first flow space U1.

Accordingly, even when thermal runaway occurs in any one of the blocks 110 and gas and/or heat are generated, the gas and/or heat are discharged to the upper portion of the block space BS through the exhaust hole 310 of the first cover 300 or the block exhaust hole 312 rather than discharged from the block space BS through the through-hole 214 and stagnate in the block space BS until the pressure of the block space BS corresponding to the blocks 110 where thermal runaway is occurring or the pressure of the predetermined space S including the block space BS becomes sufficiently high. As a result, thermal propagation may be delayed.

Here, the plurality of block spaces BS may extend in the first direction and be provided side by side in the second direction perpendicular to the first direction, and the through-hole 214 corresponding to the predetermined space S of each of the at least one of the plurality of battery modules 100 may be opened such that the plurality of block spaces BS are connected to the first flow space U1 when a pressure of any one of the plurality of block spaces BS increases.

Accordingly, even when the block spaces BS of other blocks 110 as well as the block space BS of the block 110 where thermal runaway is occurring are connected to the first flow space U1, gas and/or heat discharged through the through-hole 214 from the block space BS of block 110 where thermal runaway is occurring does not flow back into the block space BS of other blocks 110 through the through-hole 214 due to the block spaces BS extending in the first direction and provided side by side in the second direction perpendicular to the first direction. This is because gas and/or heat discharged in the first direction from the block space BS of block 110 where thermal runaway is occurring must turn 180 degrees In order to flow into the block space BS of other blocks 110. As a result, thermal propagation may be delayed even when all of block spaces BS are connected to the first flow space U1 caused by an increase in the pressure of any one of the plurality of block spaces.

A plurality of blocking plates 230 may be provided. The plurality of blocking plates 230 may be installed adjacent to the plurality of through-holes 214, respectively. The plurality of blocking plates 230 may block the plurality of through-holes 214, respectively (FIGS. 9 and 10).

When a pressure of a predetermined space S corresponding to a through-hole 214 blocked by a blocking plate 230 is equal to or greater than the threshold value, the blocking plate 230 blocking the through-hole 214 is damaged to open the through-hole 214. Thus the through-hole 214 remains closed when a pressure of the predetermined space S is less than the threshold value and is opened when the pressure of the predetermined space S is equal to or greater than the threshold value.

Accordingly, the through-hole 214 connecting the inside and outside of the predetermined space S that may be opened and closed according to the pressure of the predetermined space S may be provided at low cost and with a simple configuration.

### [EXPERIMENT RESULTS]

Further referring to FIG. 12, the time taken for thermal propagation to reach to adjacent battery module 100 after thermal runaway occurs in one of the plurality of battery modules 100 of the battery pack is approximately 17 minutes (1022 seconds) according to the present invention compared to 8 seconds in the conventional battery pack. That is, in the battery pack of the present invention, thermal propagation is significantly delayed.

Meanwhile, in FIG. 12, "V0" represents the time taken until the voltage of the battery module 100 where thermal runaway occurs reaches 0V, and "Pressure" represents the value obtained by subtracting 1 (unit: bar) from the measured value.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

**[DESCRIPTION OF REFERENCE NUMERALS]**

| | | | |
|---|---|---|---|
| 10: | battery pack | | |
| 100: | battery module | 110: | block |
| 120: | module housing | 122: | partition wall |
| S: | predetermined space | BS: | block space |
| 200: | pack housing | | |
| 212: | first division wall | 214: | through-hole |
| 216: | through-hole | 218: | second division wall |
| 230: | membrane plate | | |
| C: | accommodating space | | |
| U1: | first flow space | U2: | second flow space |
| F: | filter | T: | exhaust port |
| 300: | first cover | 302: | upper frame |
| 304: | rib | 306: | through-hole |
| 310: | exhaust hole | 312: | block exhaust hole |
| 400: | second cover | 500: | barrier wall |

## Claims

1. A battery pack comprising:
a plurality of battery modules 100 wherein each of the plurality of battery modules 100 comprises one or more battery cells and a module housing 120 accommodating the one or more battery cells and which is at least partially opened upwards;
a pack housing 200 accommodating the plurality of battery modules 100 and provided with an exhaust port T; and
a first cover 300 covering upper portions of the plurality of battery modules 100, the first cover 300 provided with a plurality of exhaust holes 310 corresponding to the plurality of battery modules 100, respectively, the plurality of exhaust holes 310 perforating the first cover 300 vertically and in communication with the exhaust port T,
wherein each of the plurality of exhaust holes 310 is vertically in communication with an inner space of the module housing 120 of corresponding battery module 100, and has an inner circumferential surface with an upper end higher than an upper end of the one or more battery cells accommodated in the module housing 120 of the corresponding battery module 100,
at least one of: the module housing 120 of each of the plurality of battery modules 100; and the pack housing 200, and the first cover 300 define a predetermined space S corresponding to each of the plurality of battery modules 100, blocked on all sides but opened upwards by the exhaust hole 310 of the corresponding battery module 100 and accommodating the one or more battery cells of the corresponding battery modules 100, and
different predetermined spaces S accommodating the one or more battery cells of the different battery modules 100 are separated from each other.

2. The battery pack of claim 1, further comprising:
a second cover 400 installed above and spaced apart from the first cover 300 by a predetermined distance; and
one or more barrier walls 500 disposed between the first cover 300 and the second cover 400 and in contact with or coupled to the first cover 300 and the second cover 400 in vertical direction, the one or more barrier walls 500 interfering with a flow of gas or heat generated from the one or more battery cells accommodated in the predetermined space S,
wherein each of the one or more barrier walls 500 is disposed between a pair of different exhaust holes 310 adjacent to each other when projected on a horizontal plane.

3. The battery pack of claim 2, wherein the one or more barrier walls 500 are coupled to a lower surface of the second cover 400.

4. The battery pack of claim 2, wherein the plurality of battery modules 100 extend in first direction intersecting vertical direction and are disposed side by side in the pack housing 200 in second direction intersecting the vertical direction and the first direction,
the plurality of exhaust holes 310 are separated from each other in the second direction,
the one or more barrier walls 500 extend in the first direction and are arranged side by side in the second direction between the plurality of exhaust holes 310, and
the first cover 300 and the second cover 400 extend longer in the first direction than one end or other end of the one or more barrier wall 500 such that gas or heat generated from the one or more battery cells accommodated in each predetermined space S flows at one side or at the other side of each of the one or more barrier walls 500 in a direction intersecting the vertical direction and the first direction between the first cover 300 and the second cover 400.

5. The battery pack of claim 4, wherein in the first direction, the one end of each barrier wall 500 is at same location as the one end of the exhaust hole 310 adjacent to the each barrier wall 500, or is located at the one side of the one end of the exhaust hole 310 adjacent to the each barrier wall 500, and
in the first direction, the other end of each barrier wall 500 is at same location as the other end of the exhaust hole 310 adjacent to the each barrier wall 500, or is located at the other side of the other end of the exhaust hole 310 adjacent to the each barrier wall 500.

6. The battery pack of claim 5, wherein the second direction is perpendicular to the first direction.

7. The battery pack of claim 1, wherein each of at least one of the plurality of battery modules 100 comprises a plurality of blocks 110, each of the plurality of blocks 110 comprising one or more of the battery cells,
for each of the at least one of the plurality of battery modules 100, the exhaust hole 310 corresponding to the battery module 100 comprise a plurality of block exhaust holes 312 corresponding to the plurality of blocks 110, respectively, the plurality of block exhaust holes 312 perforating the first cover 300 vertically, in communication with the exhaust port T and separated from each other,
each of the plurality of block exhaust holes 312 is vertically in communication with the inner space of the module housing 120 where one or more of the battery cells of corresponding block 110 are accommodated, and has an inner circumferential surface with an upper end higher than the upper end of the one or more battery cells accommodated in the module housing 120,
the predetermined space S of each of the at least one of the plurality of battery modules 100 comprises a plurality of block spaces BS corresponding to the plurality of blocks 110, respectively,
each of the plurality of block spaces BS accommodates one or more of the battery cells included in each of the plurality of blocks 110 corresponding to the each of the plurality of block spaces BS, and is opened upwards by the block exhaust hole 310 corresponding to the each of the plurality of blocks 110, and
the plurality of block spaces BS are separated from each other.

8. The battery pack of claim 7, further comprising:
a second cover 400 installed above the first cover 300 and spaced apart from the first cover 300 by a predetermined distance; and
one or more barrier walls 500 disposed between the first cover 300 and the second cover 400 and in contact with or coupled to the first cover 300 and the second cover 400 in vertical direction, the one or more barrier walls 500 interfering with a flow of gas or heat generated from the one or more battery cells accommodated in the predetermined space S or the block space BS,
wherein each of the one or more barrier walls 500 is disposed between a pair of different exhaust holes 310 adjacent to each other or between a pair of different block exhaust holes 312 adjacent to each other when projected on a horizontal plane.

9. The battery pack of claim 8, wherein the plurality of battery modules 100 extend in first direction intersecting vertical direction and are disposed side by side in the pack housing 200 in second direction intersecting the vertical direction and the first direction,
the plurality of exhaust holes 310 and the plurality of block exhaust holes 312 are separated from each other in the second direction,
the one or more barrier walls 500 extend in the first direction and are arranged side by side in the second direction between the plurality of exhaust holes 310 and the plurality of block exhaust holes 312, and
the first cover 300 and the second cover 400 extend longer in the first direction than one end or other end of the one or more barrier wall 500 such that gas or heat generated from one or more of the battery cells accommodated in the predetermined space S and the block space BS flows at one side or at the other side of each of the one or more barrier walls 500 in a direction intersecting the vertical direction and the first direction between the first cover 300 and the second cover 400.

10. The battery pack of claim 9, wherein in the first direction, the one end of each barrier wall 500 is at same location as the one end of the exhaust hole 310 or the one end of the block exhaust hole 312 adjacent to the each barrier wall 500, or is located at the one side of the one end of the exhaust hole 310 or the one end of the block exhaust hole 312 adjacent to the each barrier wall 500 , and
in the first direction, the other end of each barrier wall 500 is at same location as the other end of the exhaust hole 310 or the other end of the block exhaust hole 312 adjacent to the each barrier wall 500, or is located at the other side of the other end of the exhaust hole 310 or the other end of the block exhaust hole 312 adjacent to the each barrier wall 500.

11. The battery pack of claim 10, wherein the second direction is perpendicular to the first direction.

12. The battery pack of claim 1, wherein a through-hole 214 connecting the inside and the outside of the predetermined space S and capable of being opened and closed is provided at the module housing 120 or the pack housing 200 defining each predetermined space S, the through-hole 214 remaining closed when a pressure of the predetermined space S is less than a threshold value and being opened when the pressure of the predetermined space S is equal to or greater than the threshold value.

13. The battery pack of claim 12, wherein a plurality of through-holes 214 is provided, each of the plurality of through-holes 214 corresponding to the predetermined space S of the plurality of battery modules 100,
the pack housing 200 further comprises a plurality of blocking plates 230 installed adjacent to and blocking the plurality of through-holes 214, respectively, and
when a pressure of a predetermined space S corresponding to a through-hole 214 blocked by a blocking plate 230 is equal to or greater than the threshold value, the blocking plate 230 blocking the through-hole 214 is damaged to open the through-hole 214, and
thus the through-hole 214 remaining closed when a pressure of the predetermined space S is less than the threshold value and being opened when the pressure of the predetermined space S is equal to or greater than the threshold value.

14. The battery pack of claim 12, wherein the pack housing 200 is provided with: an accommodating space C where the plurality of battery modules 100 are accommodated; and a first flow space U1 where gas or heat generated in the plurality of battery modules flows, the first flow space U1 disposed at one side of the accommodating space C in first direction intersecting with vertical direction,
the plurality of battery modules 100 are accommodated side by side in the accommodating space C in second direction intersecting with the vertical direction and the first direction such that a plurality of the predetermined space S corresponding to the plurality of battery modules 100, respectively, are provided side by side in the second direction, and
the through-hole 214 corresponding to the predetermined space S is provided at one side of the predetermined space S in the first direction to connect the predetermined space S and the first flow space U1.

15. The battery pack of claim 14, wherein each of at least one of the plurality of battery modules 100 comprises a plurality of blocks 110, each of the plurality of blocks 110 comprising one or more of the battery cells,
for each of the at least one of the plurality of battery modules 100, the exhaust hole 310 corresponding to the battery module 100 comprise a plurality of block exhaust holes 312 corresponding to the plurality of blocks 110, respectively, the plurality of block exhaust holes 312 perforating the first cover 300 vertically, in communication with the exhaust port T and separated from each other,
each of the plurality of block exhaust holes 312 is vertically in communication with the inner space of the module housing 120 where one or more of the battery cells of corresponding block 110 are accommodated, and has an inner circumferential surface with an upper end higher than the upper end of the one or more battery cells accommodated in the module housing 120,
the predetermined space S of each of the at least one of the plurality of battery modules 100 comprises a plurality of block spaces BS corresponding to the plurality of blocks 110, respectively,
each of the plurality of block spaces BS accommodates one or more of the battery cells included in each of the plurality of blocks 110 corresponding to the each of the plurality of block spaces BS, and is opened upwards by the block exhaust hole 310 corresponding to the each of the plurality of block 110,
the plurality of block spaces BS are separated from each other, and
the through-hole 214 corresponding to the predetermined space S accommodating the one or more battery cells of each of the at least one of the plurality of battery modules 100 connects the plurality of block spaces BS to the first flow space U1.

16. The battery pack of claim 15, wherein the plurality of block spaces BS extend in the first direction and are provided side by side in the second direction perpendicular to the first direction, and
the through-hole 214 corresponding to the predetermined space S of each of the at least one of the plurality of battery modules 100 is opened and connects all of the plurality of block spaces BS to the first flow space U1 when a pressure of any one of the plurality of block spaces BS increases.
